# EUROPÄISCHE PATENTSCHRIFT

(11) **EP 1 335 811 B1**
(45) Veröffentlichungstag und Bekanntmachung des Hinweises auf die Patenterteilung: **31.03.2004**
(21) Anmeldenummer: 01997374.2
(22) Anmeldetag: 13.11.2001
(51) Int. Cl.: B23K 35/30, F16C 33/06

(54) **GLEITLAGER FÜR EINE KREISELPUMPE**
SLIDE BEARING FOR A CENTRIFUGAL PUMP
PALIER LISSE POUR UNE POMPE CENTRIFUGE

(30) Priorität: 24.11.2000 DE 10058499
(43) Veröffentlichungstag der Anmeldung: 20.08.2003
(73) Patentinhaber: KSB Aktiengesellschaft, 67227 Frankenthal (DE)
(72) Erfinder: STURM, Hans-Dieter, 67229 Gerolsheim (DE); SEHR, Frank, 67134 Birkenheide (DE); DWARS, Anja, 90471 Nürnberg (DE)
(86) Internationale Anmeldenummer: PCT/EP2001/013096
(87) Internationale Veröffentlichungsnummer: WO 2002/042032

(56) Entgegenhaltungen:
- EP-B- 0 345 214
- FR-A- 2 204 250
- US-A- 5 051 112
- US-A- 5 087 529

## Beschreibung

Gegenstand der Erfindung ist ein vom Fördermedium geschmiertes Gleitlager einer Kreiselpumpe, bestehend aus einem im Gehäuse der Kreiselpumpe angeordneten feststehenden Teil und einem auf der Welle der Kreiselpumpe angeordneten umlaufenden, mit dem feststehenden Teil in einer Gleitpaarung zusammenwirkenden Teil, wobei das eine Teil der Gleitpaarung aus einem Kompositmaterial, insbesondere aus Kohle- oder SiC-Fasern mit einer Matrix aus PEEK, Kohle oder Kohle mit SiC besteht, während das andere Teil eine aus einem harten metallischen Material bestehende Gleitfläche besitzt, die von einem Trägermaterial getragen wird.

Aus tribologischen Untersuchungen ist bekannt, daß Kompositmaterialien, die selbstgepaart in Gleitlagern eingesetzt werden, nur sehr begrenzt belastbar sind. Wird jedoch eine Gleitpaarung mit harten, glattpolierten Gegenlaufpartnern gebildet, besitzt diese Paarung hervorragende Eigenschaften für einen Einsatz in mediengeschmierten Lagern. So ist eine derartige Paarung unter anderem sehr verschleißbeständig. Dies hat seine Ursache darin, daß die sehr harten Gegenlaufpartner auch unter hohen tribologischen Belastungen im Mischreibungsbereich, zum Teil sogar bei gleichzeitiger Feststoffbelastung verschleißbeständig sind. Daher entsteht an den harten Gegenlaufpartnem kein Abrieb. Also können auch keine Abriebprodukte den weicheren Gegenlaufpartner zerstören. Eine verschleißbedingte Spalterweiterung wird auf ein Minimum reduziert.

Eine bekannte Maßnahme zur Verwirklichung eines Gleitlagers mit den geschilderten Eigenschaften besteht darin, eine haftfeste Hartbeschichtung auf dem Gegenlaufpartner des aus einem Kompositmaterial bestehenden Lagerteils vorzunehmen. Eine derartige Hartbeschichtung auf der Basis von Chromcarbid, Aluminiumoxid, Titanoxid oder von metallischen Schichten hat sich bei korrosionschemisch neutralen, chloridfreien Medien bewährt. Einem Einsatz in chloridbelasteten und/oder korrosiv wirkenden Medien halten derartige Gleitlager allerdings nur in begrenztem Maße stand, da dort eine Unterkorrosion der Schichten zu befürchten ist. Eine solche Korrosion führt zum Abplatzen der Beschichtung und damit zu einer Zerstörung des Gleitlagers, was wiederum zu weitreichenden Folgen für eine mit einem derartigen Gleitlager ausgestattete Kreiselpumpe führen kann.

Der Erfindung liegt die Aufgabe zugrunde, ein Gleitlager der eingangs genannten Art zu schaffen, das in chloridhaltigen und korrosiven Medien einsetzbar, dabei aber die Gleitfläche nicht von der Gefahr einer Unterkorrosion betroffen ist.

Die gestellte Aufgabe wird erfindungsgemäß dadurch gelöst, daß zwischen dem harten metallischen Material der Gleitfläche und dem die Gleitfläche tragenden Trägermaterial des entsprechenden Teils des Gleitlagers eine im Schmelzzustand entstandene Verbindung besteht.

Eine im Schmelzzustand hergestellte Verbindung ist sicher gegen ein Unterkriechen durch ein korrosives Medium; sie ist sicher gegen ein Abplatzen oder Brechen. Die Verbindung kann hergestellt werden durch eine Auftragsschweißung von korrosions- und verschleißbeständigem harten Material auf ein aus einem duktilen Werkstoff bestehendes Trägermaterial. In der Schweißzone entsteht jeweils eine aus dem harten Material und dem Trägermaterial bestehende Schmelzschicht, die nach dem Erstarren für eine innige Verbindung zwischen den Materialien sorgt.

Eine besonders vorteilhafte Ausführung der Erfindung ist gegeben bei einem durch Gießen hergestellten Teil, bei welchem das Trägermaterial und das Material der Gleitfläche aus einer homogenen, hoch verschleiß- und korrosionsbeständigen Legierung bestehen. Es ist leicht einzusehen, daß ein aus einem Guß hergestelltes Teil vor allem zwei Vorteile besitzt: Es ist mit vergleichsweise geringem Aufwand herstellbar und es besitzt aufgrund seiner Homogenität eine hohe Beständigkeit gegen chemische und mechanische Belastungen.

In zweckmäßiger Ausgestaltung der Erfindung wird vorgeschlagen, daß das die Gleitfläche tragende gegossene Teil aus einer Co-Basis-Legierung besteht. Alternativ hierzu wird vorgeschlagen, daß das die Gleitfläche tragende gegossene Teil aus einem hochlegierten Hartguß besteht.

Das erfindungsgemäße Gleitlager zeichnet sich in allen seinen Varianten durch eine hohe Schadenstoleranz aus. Selbst bei einer Verkippung des Gleitlagers bildet sich aufgrund der den Kompositen eigenen Möglichkeiten ein selbsteinschleifender optimaler Spalt, der die geforderte Planparallelität der Laufflächen wieder herstellt. Ein Bauteilversagen durch Bruch eines oder beider Partner der Gleitpaarung wird somit vermieden.

## Patentansprüche

1. Vom Fördermedium geschmiertes Gleitlager einer Kreiselpumpe, bestehend aus einem im Gehäuse der Kreiselpumpe angeordneten feststehenden Teil und einem auf der Welle der Kreiselpumpe angeordneten umlaufenden, mit dem feststehenden Teil in einer Gleitpaarung zusammenwirkenden Teil, wobei das eine Teil der Gleitpaarung aus einem Kompositmaterial, insbesondere aus Kohle- oder SiC-Fasern mit einer Matrix aus PEEK, Kohle oder Kohle mit SiC besteht, während das andere Teil eine aus einem harten metallischen Material bestehende Gleitfläche besitzt, die von einem Trägermaterial getragen wird, **dadurch gekennzeichnet, daß** zwischen dem harten metallischen Material der Gleitfläche und dem die Gleitfläche tragenden Trägermaterial des entsprechenden Teils des Gleitlagers eine im Schmelzzustand entstandene Verbindung besteht.

2. Gleitlager nach Anspruch 1, **gekennzeichnet durch** ein aus einem duktilen Werkstoff bestehendes Trägermaterial und ein aus einem korrosions- und verschleißbeständigen, die Gleitfläche bildenden Material, wobei zwischen dem Trägermaterial um dem Material der Gleitfläche eine in einer Auftragsschweißung entstandene Schmelzverbindung besteht.

3. Gleitlager nach Anspruch 1, **gekennzeichnet durch** ein in einem Gießverfahren hergestelltes Teil, bei welchem das Trägermaterial und das Material der Gleitfläche aus einer homogenen, hoch verschleiß- und korrosionsbeständigen Legierung bestehen.

4. Gleitlager nach Anspruch 3, **dadurch gekennzeichnet, daß** das die Gleitfläche tragende gegossene Teil aus einer Co-Basis-Legierung besteht.

5. Gleitlager nach Anspruch 3, **dadurch gekennzeichnet, daß** das die Gleitfläche tragende gegossene Teil aus einem hochlegierten Hartguß besteht.

## Claims

1. Slide bearing, which is lubricated by the delivery medium, of a centrifugal pump, comprising a stationary part, which is arranged in the casing of the centrifugal pump, and a rotating part, which is arranged on the shaft of the centrifugal pump and interacts in a slide pairing with the stationary part, one part of the slide pairing consisting of a composite material, in particular of carbon or SiC fibres with a matrix of PEEK, carbon or carbon with SiC, while the other part has a sliding surface which consists of a hard metallic material and is supported by a carrier material, **characterized in that** a join which was formed in the molten state exists between the hard metallic material of the sliding surface and the carrier material, which bears the sliding surface, of the corresponding part of the slide bearing.

2. Slide bearing according to Claim 1, **characterized by** a carrier material which consists of a ductile material and a corrosion- and wear-resistant material forming the sliding surface, with a melted join formed in a build-up welding operation existing between the carrier material and the material of the sliding surface.

3. Slide bearing according to Claim 1, **characterized by** a part which is produced using a casting process and in which the carrier material and the material of the sliding surface consist of a homogeneous, highly wear-and corrosion-resistant alloy.

4. Slide bearing according to Claim 3, **characterized in that** the cast part which bears the sliding surface consists of a Co-based alloy.

5. Slide bearing according to Claim 3, **characterized in that** the cast part which bears the sliding surface consists of a high-alloy chill casting.

## Revendications

1. Palier lisse d'une pompe centrifuge, lubrifié par du liquide refoulé, se composant d'une partie fixe disposée dans un carter de la pompe centrifuge et d'une partie rotative disposée sur l'arbre de la pompe centrifuge, coopérant avec la partie fixe dans un système d'association par paire coulissante, une partie du système d'association par paire coulissante se composant d'un matériau composite, notamment de fibres de carbone ou de SiC avec une matrice en PEEK, en carbone ou en carbone avec du SiC, tandis que l'autre partie possède une surface de glissement se composant d'un matériau métallique dur qui est portée par un matériau de support, **caractérisé en ce qu'**entre le matériau métallique dur de la surface de glissement et le matériau de support de la partie correspondante du palier lisse, portant la surface de glissement, il existe une liaison s'étant réalisée à l'état fondu.

2. Palier lisse selon la revendication 1, **caractérisé par** un matériau de support se composant d'un matériau ductile et par un matériau résistant à la corrosion et à l'usure, formant la surface de glissement, une liaison par fusion s'étant produite lors d'un soudage à superposition existant entre le matériau de support et le matériau de la surface de glissement.

3. Palier lisse selon la revendication 1, **caractérisé par** une partie fabriquée dans un procédé de coulage, dans lequel le matériau de support et le matériau de la surface de glissement se composent d'un alliage homogène, hautement résistant à l'usure et à la corrosion.

4. Palier lisse selon la revendication 3, **caractérisé en ce que** la partie coulée portant la surface de glissement se compose d'un alliage à base de Co.

5. Palier lisse selon la revendication 3, **caractérisé en ce que** la partie coulée portant la surface de glissement se compose d'une fonte dure fortement alliée.
